# EUROPÄISCHE PATENTSCHRIFT

(11) **EP 1 424 925 B1**
(45) Veröffentlichungstag und Bekanntmachung des Hinweises auf die Patenterteilung: **12.10.2005**
(21) Anmeldenummer: 02767425.8
(22) Anmeldetag: 23.08.2002
(51) Int. Cl.: A47J 19/02

(54) **FRUCHTPRESSE**
FRUIT PRESS
PRESSE A FRUITS

(30) Priorität: 30.08.2001 DE 10142507
(43) Veröffentlichungstag der Anmeldung: 09.06.2004
(73) Patentinhaber: BSH Bosch und Siemens Hausgeräte GmbH, 81739 München (DE)
(72) Erfinder: STEFFL, Michael, 83250 Marquartstein (DE); KRAMER, Siegmund, 83417 Kirchanschöring (DE); ZIBRET, Igor, 3327 Smartno ob Paki (SI); PAVLOVIC, Henrik, Ljubno ob Savin 3333 (SI); MAZEJ, Stanislav, 3303 Gomilsko (SI); BREZOVNIK, Peter, 3330 Mozirje (SI); AREH, Marko, 2360 Radlje ob Dravi (SI)
(86) Internationale Anmeldenummer: PCT/EP2002/009462
(87) Internationale Veröffentlichungsnummer: WO 2003/020091

(56) Entgegenhaltungen:
- DE-A- 2 748 683
- DE-B- 1 187 349
- DE-U- 1 940 644
- US-A- 1 533 208

## Beschreibung

Die Erfindung betrifft eine über einen Elektromotor angetriebene Fruchtpresse mit einem mittig angeordneten, herausragenden und sich nach oben verjüngenden Element zum Auspressen einer Frucht, das über eine mit dem Element verbundene Antriebswelle durch den Elektromotor antreibbar ist, wie aus dem Dokument US 1 533 208 bekannt.

Aus der EP 0 362 958 B1 ist eine derartige, durch einen Elektromotor angetriebene Fruchtpresse bekannt. Dort treibt der Motor über einen Zahnriemen und über Riemenscheiben eine Welle an, auf deren oberem Ende die Fruchtpresse zusammen mit einem mittig aus ihr herausragenden und sich nach oben verjüngenden Element angeordnet ist.

Das Einschalten einer motorischen Fruchtpresse wird bei bekannten Fruchtpressen entweder dadurch realisiert, dass der Bediener einen Schalter betätigt, so dass sich der Elektromotor in Drehung versetzt, oder dadurch, dass über einen mit der Fruchtpresse verbundenen Hebelmechanismus und über Zahnräder die Fruchtpresse eingeschaltet wird, wenn durch den Bediener Druck auf das Element ausgeübt wird.

Es ist die Aufgabe der Erfindung, eine auf einfache Weise ein- und ausschaltbare Fruchtpresse zu schaffen.

Erfindungsgemäß wird diese Aufgabe bei einer Fruchtpresse der eingangs genannten Art dadurch gelöst, dass die Antriebswelle in axialer Richtung bewegbar ist und dass durch Herunterdrücken des Elements die Antriebswelle gegen ein Schaltmittel drückbar ist, durch den der Elektromotor einschaltbar ist.

Allein durch einen Druck auf das Element, der von dem Bediener automatisch ausgeübt wird, wenn er eine Zitrusfrucht auspressen möchte, wird gleichzeitig ein elektrischer Kontakt hergestellt und der Motor eingeschaltet. Gemäß der Erfindung lässt sich eine einfach aufgebaute Fruchtpresse einschließlich ihres Antriebs bauen. Mit diesem Vorteil ist auch eine einfache Montage der Fruchtpresse bei der Herstellung unter minimalem Einsatz von Bauteilen, insbesondere von drehenden Bauteilen, möglich.

Vorteilhafte Weiterbildungen der Erfindung ergeben sich aus den Unteransprüchen und der Beschreibung.

Eine besonders bevorzugte Variante einer Fruchtpresse ist dadurch gekennzeichnet, dass das Schaltmittel einen Taster umfasst und dass durch die Antriebswelle ein Schalthebel oder eine Schaltwippe betätigbar ist, durch den bzw. die der Taster betätigbar ist. Durch den Schalthebel lässt sich nach dem Prinzip eines einarmigen Hebels der Weg, den der Taster zurücklegt, im Verhältnis zu dem Weg festlegen, den die Antriebswelle beim Herunterdrücken zurücklegt. Ebenfalls lässt sich erreichen, dass die Schaltwippe gegen einen Anschlag gedrückt wird, um ein Überdrücken des Tasters zu verhindern, wodurch dieser beschädigt oder zerstört werden könnte.

In einer weiteren bevorzugten Ausführungsform weist die Fruchtpresse eine Druckfeder auf, über die die Antriebswelle gegenüber einer Wellenbuchse gelagert ist. Eine mit der Antriebswelle verbundene Nabe übergreift die Druckfeder, die bei Ausübung einer Kraft auf das Element nach unten gedrückt wird.

Bevorzugt liegt die Druckfeder auf einer Gleitscheibe auf.

Nachstehend wird die Erfindung in einem Ausführungsbeispiel anhand der Figuren näher erläutert. Es zeigen:
- Fig. 1:: eine Fruchtpresse im Längsschnitt und
- Fig. 2:: einen Schalter gemäß Fig. 1, vergrößert, im Längsschnitt.

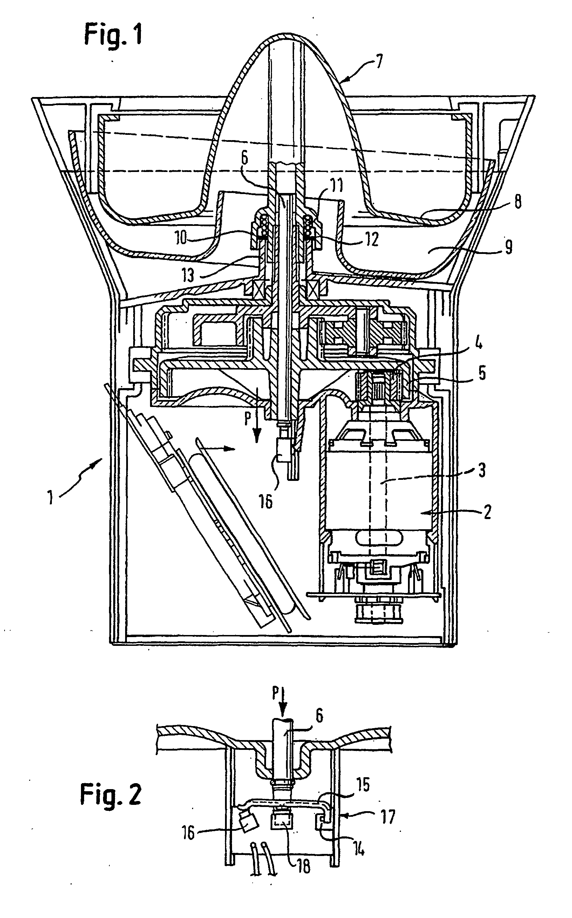

Eine Fruchtpresse 1 (Fig. 1) weist einen Elektromotor 2 als Antriebsmotor auf. Dieser treibt auf eine Antriebswelle 3. Auf der Antriebswelle 3 ist endseitig ein Zahnrad 4 angeordnet, das mit einem Zahnrad 5 kämmt.

Das Zahnrad 5 ist auf einer Antriebswelle 6 befestigt. An ihrem oberen Ende trägt die Antriebswelle 6 ein Element 7, das im wesentlichen als Rotationsparaboloid, als Kegel, Kegelstumpf oder als Halbkugel ausgebildet ist. Das Element 7 trägt Grate und dazwischenliegende Vertiefungen, die zum Auspressen einer Frucht dienen. Der ausgepresste Saft läuft in ein ringförmig um das Element 7 und zusammen mit diesem über die Antriebswelle drehbaren Auffangbehältnis 8. Dieses weist Schlitze auf, aus denen der Saft in eine unbeweglich angeordnete Auffangschale 9 rinnt.

Auf seiner Unterseite ist das Element 7 mit einer Nabe 10 verbunden. Diese ist fest mit der Antriebswelle 6 verbunden. Die Nabe 10 liegt über eine Druckfeder 11 und eine Gleitscheibe 12 auf einer Wellenbuchse 13 auf.

Wenn nun eine Frucht auf das Element 7 aufgelegt wird, um diese auszupressen, und eine Kraft auf das Element 7 ausgeübt wird, wird dieses zusammen mit der Nabe 10 und der Antriebswelle 6 gegen die rücktreibende Kraft der Druckfeder 11 heruntergedrückt, wobei sich die Antriebswelle 6 in Richtung eines Pfeils P bewegen lässt.

Aufgrund dieser axialen Bewegung betätigt die Antriebswelle 6 einen an einem Befestigungspunkt 14 (Fig. 2) befestigten und um sein freies Ende schwenkbar angeordneten Schalthebel 15, so dass dieser gegen eine Taste 16 gedrückt wird. Die Taste 16 wird von einer Gehäusehalterung 17 aufgenommen. Durch das Schließen eines Schaltkontakts mittels der Taste 16 wird der Elektromotor 2 betätigt und treibt über die Antriebswellen 3 und 6, die Zahnräder 4 und 5 sowie die Nabe 10 das Element 7 zusammen mit dem Auffangbehältnis 8 an, um Saft aus der Frucht herauszupressen.

Durch die Erfindung wird eine Fruchtpresse 1 geschaffen, die durch einen Elektromotor 2 angetrieben ist. Die Fruchtpresse 1 ist mit einem mittig angeordneten, herausragenden und sich nach oben verjüngenden Element 7 zum Auspressen einer Frucht ausgestattet. Dieses ist über eine mit dem Element 7 verbundene Antriebswelle 6 antreibbar ist. Die Antriebswelle 6 ist in axialer Richtung bewegbar. Durch Herunterdrücken des Elements 7 wird die Antriebswelle 6 gegen ein Schaltmittel 16 gedrückt und dadurch der Elektromotor 2 eingeschaltet.

Der Schalthebel 15 lässt sich nur bis gegen einen Anschlag 18 herunterdrücken. Dieser ist so angeordnet, dass einerseits eine sichere Betätigung der Taste 16 möglich ist, dass andererseits jedoch ein Überdrücken der Schaltwippe 15 gegen die Taste 16 ausgeschlossen ist, wodurch diese beschädigt oder zerstört würde.

## Patentansprüche

1. Fruchtpresse (1) mit einem mittig angeordneten, um eine Drehachse drehbaren, herausragenden und sich nach oben verjüngenden Element (7) zum Auspressen einer Frucht, das von einer Antriebswelle (3) eines Elektromotors (2) über im Gehäuse axial starr gelagerte Zahnräder (4,5) antreibbar ist, und ein axial bewegbares Element (6) aufweist, das mit dem sich verjüngenden Element (7) verbunden ist und das zum Schalten des Elektromotors (2) durch Herunterdrücken des sich verjüngenden Elements (7) gegen ein Schaltmittel (16) drückbar ist, **dadurch gekennzeichnet, dass** das axial bewegbare Element (6) zur Betätigung des Schaltmittels (16) über seine axiale Stirnseite ausgebildet ist.

2. Fruchtpresse nach Anspruch 1, **dadurch gekennzeichnet, dass** das Schaltmittel (16) eine Taste umfaßt, die über einen Schalthebel (15) oder eine Schaltwippe durch das axial bewegbare Element (6) betätigbar ist.

3. Fruchtpresse nach Anspruch 1 oder 2, **dadurch gekennzeichnet, dass** das sich verjüngende Element (7) eine Nabe (10) aufweist, die eine Wellenbuchse (13) übergreift.

4. Fruchtpresse nach Anspruch 3, **dadurch gekennzeichnet, dass** zwischen der Nabe (10) und der Wellenbuchse (13) eine Druckfeder (11) gelagert ist.

5. Fruchtpresse nach Anspruch 4, **dadurch gekennzeichnet, dass** die Druckfeder (11) auf einer Gleitscheibe (12) aufliegt.

6. Fruchtpresse nach einem der Ansprüche 1 bis 5, **dadurch gekennzeichnet, dass** ein Mittel (18) vorhanden ist, durch das ein Überdrücken des Schaltmittels (16) bzw. der Taste verhindert ist.

7. Fruchtpresse nach Anspruch 6, **dadurch gekennzeichnet, dass** das Mittel (18) ein Anschlag ist.

## Claims

1. Fruit press (1) with a centrally arranged outwardly projecting and upwardly tapering element (7), which is rotatable about an axis of rotation, for squeezing a fruit, which element is drivable by a drive shaft (3) of an electric motor (2) via gearwheels (4, 5) axially fixedly mounted in the housing, and has an axially movable element (6) which is connected with the tapering element (7) and which for switching the electric motor (2) can be pressed against a switching means (16) by pressing down the tapering element (7), **characterised in that** the axially movable element (6) is constructed for actuating the switching means (16) by way of its axial end face.

2. Fruit press according to claim 1, **characterised in that** the switching means (16) comprises a button which is actuable by the axially movable element (6) by way of a switching lever (15) or a switching rocker.

3. Fruit press according to claim 1 or 2, **characterised in that** the tapering element (7) has a hub (10) engaging over a shaft bush (13).

4. Fruit press according to claim 3, **characterised in that** a compression spring (11) is mounted between the hub (10) and the shaft bush (13).

5. Fruit press according to claim 4, **characterised in that** the compression spring (11) rests on a slide washer (12).

6. Fruit press according to one of claims 1 to 5, **characterised in that** a means (18) is present, by means of which over-pressing of the switching means (16) or the button is prevented.

7. Fruit press according to claim 6, **characterised in that** the means (18) is an abutment.

## Revendications

1. Presse à fruits (1) comportant un élément (7) disposé centralement, rotatif autour d'un axe de rotation, faisant saillie et s'amincissant vers le haut pour presser un fruit, pouvant être entraîné par un arbre d'entraînement (3) d'un moteur électrique (2) via des roues dentées (4, 5) logées rigidement axialement dans le boîtier, et un élément mobile axialement (6), relié à l'élément (7) s'amincissant et qui peut être pressé contre un moyen de commande (16) pour commander le moteur électrique (2) en pressant vers le bas l'élément (7) s'amincissant, **caractérisée en ce que** l'élément (6) déplaçable axialement est conçu pour actionner le moyen de commande (16) via sa face avant axiale.

2. Presse à fruits selon la revendication 1, **caractérisée en ce que** le moyen de commande (16) comprend une touche, qui peut être actionnée par l'élément (6) mobile axialement via un levier de commande (15) ou une bascule de commande.

3. Presse à fruits selon la revendication 1 ou 2, **caractérisée en ce que** l'élément (7) s'amincissant comprend un moyeu (10), qui recouvre une douille d'arbre (13).

4. Presse à fruits selon la revendication 3, **caractérisée en ce qu'**un ressort de pression (11) est logé entre le moyeu (10) et la douille d'arbre (13).

5. Presse à fruits selon la revendication 4, **caractérisée en ce que** le ressort de pression (11) repose sur un disque de glissement (12).

6. Presse à fruits selon l'une des revendications 1 à 5, **caractérisée en ce qu'**un moyen (18) est disponible, qui empêche une surpression du moyen de commande (16) resp. de la touche.

7. Presse à fruits selon la revendication 6, **caractérisée en ce que** le moyen (18) est une butée.
